# EUROPÄISCHE PATENTANMELDUNG

(11) **EP 0 522 222 A1**
(43) Veröffentlichungstag der Anmeldung: **13.01.1993**
(21) Anmeldenummer: 91810541.2
(22) Anmeldetag: 09.07.1991
(51) Int. Cl.: A61C 13/30

(54) **Zahnfachverschluss**

(71) Anmelder: Nordin, Harald E., CH-1822 Chernex (CH)
(72) Erfinder: Nordin, Harald E., CH-1822 Chernex (CH)
(74) Vertreter: Seehof, Michel

(57) **Zusammenfassung**

Es wird ein Verschlussstück (16) für das Fach eines extrahierten oder verlorenen Zahnes im Kieferknochen (10) beschrieben, das dem Zahnfach gemäss verjüngt ausgebildet ist und eine axiale Gewinde-Blindbohrung (20) aufweist. in diese ist eine Rundkopfschraube 21 eingeschraubt.

Nach Einwachsen des Verschlusstückes kann dessen Bohrung mit Hilfe des runden Kopfes (22) der Schraube (21) leicht aufgefunden werden und zur Verankerung eines Kunstzahnes benutzt werden.

## Beschreibung

Die Erfindung betrifft einen Zahnverschluss, der als Anker für den Aufbau eines Ersatzzahnes geeignet ist.

Beim Ziehen eines Zahnes hinterbleibt ein entsprechendes Loch im Zahnfach des Kiefers. Wird dieses nicht ausgefüllt, so wächst es von den Wandungen her mit Kieferknochenmasse zu, wobei sich mindestens die beiden benachbarten verbliebenen Zähne in Richtung des Loches neigen, was natürlich höchst unerwünscht ist.

Es ist bereits bekannt, das Zahnfach mit konischen, teilkonischen oder zylindrischen Formstücken zu verschliessen, die zum Verbleib im Zahnfach bestimmt sind, dort einwachsen sollen und später, wenn die Operationsfolgen abgeklungen sind, als Anker für den Aufbau eines Kunstzahnes dienen. Solche Verschlussstücke können ein axiales Sackloch aufweisen, das als Anschluss für die übrigen Bauteile des späteren Kunstzahnes dient. Vor dem Aufbau des Kunstzahnes muss die vom Körper veranlasste feste Verbindung des Verschlussstückes mit dem Kiefer abgewartet werden, die in der Regel einige Monate dauert. In dieser Zeit wächst nicht nur das Verschlussstück an den Kieferknochen an, sondern es wird auch von neu gebildetem Zahnfleisch überdeckt und das Sackloch damit ausgefüllt. Ueberdies ist das Sackloch für die Bildung von Infektionsherden anfällig.

Wenn nach der erforderlichen Wartezeit der Kunstzahn erstellt werden soll, muss zunächst das Sackloch des Verschlussstückes gesucht werden. Dies ist eine zeitraubende und mühevolle Angelegenheit, und wenn es einmal gefunden ist, muss es aufwendig geleert und gesäubert werden.

Hier will die Erfindung Abhilfe schaffen und ein Verschlussstück schaffen, das die geschilderten Nachteile nicht aufweist. Gelöst wird diese Aufgabe durch das im Patentanspruch 1 definierte Verschlussstück; Ausführungsformen bilden den Gegenstand der abhängigen Ansprüche.

Mit dem erfindungsgemässen Verschlussstück, das zuweilen auch als "Keil" bezeichnet wird, erreicht man einen sauberen Verschluss des Zahnfaches und eine Stabilisierung des Kiefers, des Zahnfleisches und der Nachbarzähne. Das Verschlussstück kann zum Aufbau eines Ersatzzahnes dienen oder als solches im Kiefer verbleiben. Im Falle des Aufbaues eines Kunstzahnes ist es mit einem Gewinde versehen, das sauber bleibt und desssen Eingang leicht wieder auffindbar ist.

In der Zeichnung ist eine Praxisausführung des Erfindungsgegenstandes als Beispiel dargestellt. Es zeigen:
Figur 1: einen teilweisen Längsschnitt eines Unterkiefers in der Ebene der Zahnachsen, mit eingesetztem und zugewachsenem Verschlussstück;
Figur 2: die Freilegung der mittigen Sackbohrung des Verschlussstückes in gleicher Darstellung wie in Figur 1; und
Figur 3: einen aufgebauten Kunstzahn in gleicher Darstellung wie in Figur 1.

In einem Unterkiefer 10, der in den Figuren als Teilschnitt dargestellt ist, sitzen zwei natürliche Zähne 12, die nicht geschnitten gezeigt sind. Auf der Oberfläche des Kieferknochens 10 wächst das Zahnfleisch 14.

Das Verschlussstück 16 ist kegelförmig; es kann zuvor an eine besondere Form des Zahnfaches 18 durch Bearbeitung angepasst werden.

Das Verschlussstück 16 ist mit einer mittigen Sackbohrung 20 mit Gewinde versehen, in das von oben eine Rundkopfschraube 27 satt sitzend eingeschraubt ist. Das Zahnfleisch hat bei 24 den Schraubenkopf 22 überwachsen.

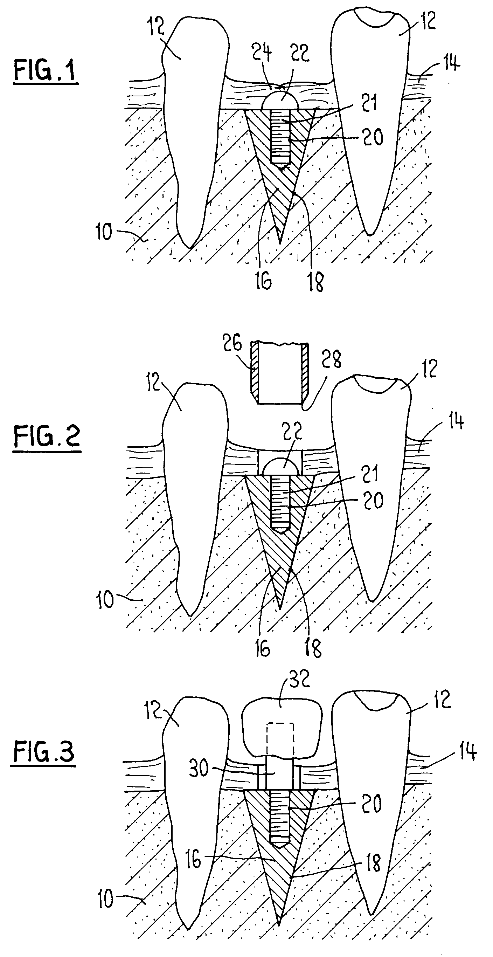

Wenn nun die Schraube 21 mit ihrem Kopf 27 freigelegt werden soll, wird ein rohrförmiges Stanzwerkzeug 26 eventuell unter Rotation auf die entsprechende Stelle des Zahnfleisches abgesenkt, selbstverständlich nach Anaesthesie und unter Beachtung aseptischer Operationsbedingungen. Beim Absenken der Stanze 26 dringt diese in das Zahnfleisch 24 ein und kommt bald in Berührung mit dem Schraubenkopf 22. Da dieser sphärisch gekrümmt ist, dient er zur Führung der Stanze 26 an deren Schneidkante 28. Wenn der Kopf 22 nicht mittig getroffen wird, so weist seine Rundung das Werkzeug 26 seitlich ab, bis es mit der Schraubenachse fluchtet. Dann kann es bis zur Oberkante des Verschlussstückes 16 dringen, wodurch der Schraubenkopf und seine Umgebung sauber freigelegt werden, wie es in Figur 2 gezeigt ist; in dieser Figur hat das Stanzwerkzeug bereits das Zahnbett verlassen und sich nach oben bewegt.

Nun kann die Schraube 21 herausgedreht werden; man findet ein absolut sauberes Gewinde in der Bohrung 20 vor.

Figur 3 zeigt, wie ein Kronenanker 30 in die Bohrung 20 des Verschlussstückes 16 eingeschraubt und dort fixiert ist. Auf dem Kopfteil des Ankers 30 ist eine Kunstzahnkrone 32 auf an sich bekannte Weise aufgebaut.

Das Verschlussstück 16 kann aus jedem Material bestehen, das sich zur Kieferimplantation eignet und im Kiefer einwächst, wie Keramik oder Metall. Vorzugsweise besteht es aus Titan oder einem nichtkorrodierenden Metall mit Titanbeschichtung. Die Schraube 21 besteht bevorzugt ebenfalls aus Titan. Zum besseren Einwachsen des Verschlussstückes in das Zahnfach und zum Schutz gegen Verdrehen bei der geschilderten Bearbeitung kann es nicht gezeigte Oberflächenelemente wie Aufrauhungen, Riefen, Nuten, Rippen, Stiftchen usw. aufweisen.

Nach vollzogenem Aufbau des kompletten Kunstzahns 16, 30, 32 wird die Operationsstelle rasch wieder von Zahnfleisch überwachsen. Das Verschlussstück eignet sich für den Ersatz jeder Zahnart, d.h. Schneidezähne, Eckzähne, Backenzähne. Es kann auch als Anker für die Befestigung und den Aufbau von Brücken dienen, und zwar sowohl am Unter- als auch am Oberkiefer. Das Bohrloch 20 im Verschlussstück 16 kann in Sonderfällen auch ausserhalb dessen Längsachse angebracht werden.

## Patentansprüche

1. Verschlussstück zum Verschluss des Zahnfaches eines extrahierten oder verlorenen Zahnes, gekennzeichnet durch einen sich in Einsetzrichtung verjüngenden Körper (16), der mit einer axialen Blindbohrung (20) mit Gewinde versehen ist, und durch eine in die Bohrung (20) dicht eingebrachte Schraube (21) mit Halbrundkopf (22).

2. Verschlussstück nach Anspruch 1, dadurch gekennzeichnet, dass es kegelförmig ist.

3. Verschlussstück nach Anspruch 1 oder 2, dadurch gekennzeichnet, dass es zumindest an seinen Oberflächen aus Titan besteht.

4. Verschlussstück nach Anspruch 1, dadurch gekennzeichnet, dass es vor dem Einsetzen ins Zahnfach dessen Form angepasst worden ist.

5. Kunstzahn, dadurch gekennzeichnet, dass er aus dem Verschlussstück (16) nach einem der Ansprüche 1 bis 4, einem Kronenanker (30) und einer künstlichen Zahnkrone (32) besteht.
